# EUROPEAN PATENT SPECIFICATION

(11) **EP 0 831 959 B1**
(45) Date of publication and mention of the grant of the patent: **12.09.2001**
(21) Application number: 96911164.0
(22) Date of filing: 19.04.1996
(51) Int. Cl.: B01D 21/24

(54) **VALVE ASSEMBLY FOR DECANTER HAVING A SURROUNDING VALVE HOUSING**
yENTILANORDNUNG FÜR DEKANTIERVORRICHTUNG MIT UMGEBENDEM VENTILGEHÄUSE
ENSEMBLE VANNE POUR APPAREIL A DECANTER LOGE DANS UN BOITIER DE VANNE

(30) Priority: 24.04.1995 SE 9501486
(43) Date of publication of application: 01.04.1998
(73) Proprietor: Läckeby Water Aktiebolag, 38031 Läckeby (SE)
(72) Inventor: RADSZUWEIT, Reinhold, S-388 98 Trekanten (SE); AXELSSON, Kjell, S-380 31 Läckeby (SE); CARLQUIST, Björn, S-392 36 Kalmar (SE)
(74) Representative: Cederbom, Hans Erik August
(86) International application number: SE9600516
(87) International publication number: WO9633790

(56) References cited:
- WO-A-93/04759
- WO-A-93/16781
- GB-A- 1 461 060
- US-A- 5 036 882
- US-A- 5 234 580

## Description

### FIELD OF THE INVENTION

The present invention relates to a decanter device, including float bodies for buoyantly supporting the decanter device in a liquid basin, the decanter device comprising a receiver having at least one inlet opening for receiving flow of liquid from the basin, and at least one outlet conduit for discharging liquid from the receiver, the receiver having at least one valve member with a first position for blocking the inlet opening, and with a second position for opening the inlet opening.

### BACKGROUND ART

Such a decanter device is known from WO 93/16781. The known device is very complicated since it requires conical guide means for the valve members. Such conical guide means are expensive to construct, and they are not easily replacable. The conical guidance also brings about a rather slow flow through the inlet opening because of the narrow inlet passage that will exist around the valve member when the valve member is lifting within such a conical guide. Besides, the known device is not entirely safe, since there is a risk that the valve member may be withdrawn by the liquid and disappear through the outlet conduit, if a sufficiently high underpressure prevails.

Another decanter device comprising a valve plate secured to the opening of a liquid receiver is disclosed in US-A-5036882.

### SUMMARY OF THE INVENTION

The object of the present invention is, therefore, to provide a device of the kind mentioned by way of introduction where the above drawbacks have been eliminated. This object will be achieved by a decanter device according to the invention having the characteristics set forth in Claim 1.

Since the inlet opening has been arranged in a plane or only slightly curved portion of the wall of the receiver, said portion of the wall will, at the interior of the inlet opening, define a flow guide for said flow of liquid entering thereinto, which flow guide extends substantially in radial directions, relative to the inlet opening, such that said flow of liquid will obtain generally radial flow composants. Thus, a very wide inlet passage will be provided for the flow of liquid that enters into the receiver (through said inlet opening and thereafter also radially through holes in the wall of the valve housing), which will cause an increased in-flow velocity.

By arranging the valve member within a valve housing, wherein the valve member is able to move freely, there will be a guarantee that the valve member can move only a limited distance away from said inlet opening, whereby the valve member is unable to be withdrawn by the flowing liquid and can thus not disappear.

Because said inlet opening has been formed in a portion of the wall of the receiver, it will be possible to form this portion as a dismountable wall piece which can, together with the valve housing and its valve member, readily be removed for service or replacement.

Further developments of the invention will be apparent from the dependent Claims.

### BRIEF DESCRIPTION OF THE DRAWINGS

The invention will be described below in more detail with reference to the accompanying drawings which illustrate a preferred embodiment.

Fig. 1 is a side view, partially in section, of a decanter reactor with a decanter device according to the invention.

Fig. 2 is an end view, partially in section, of the reactor shown in Fig. 1.

Fig. 3 is a top view of a valve housing and its valve member incorporated into the decanter device in accordance with the invention.

Fig. 4 is a cross-sectional view taken along lines IV-IV of Fig. 3.

Fig. 5 is a schematic side view of a modified embodiment of a valve housing according to the invention.

Figs. 6 and 7 illustrate schematically the flow function in a known decanter device, and in the decanter device according to the invention, respectively.

### PREFERRED EMBODIMENT

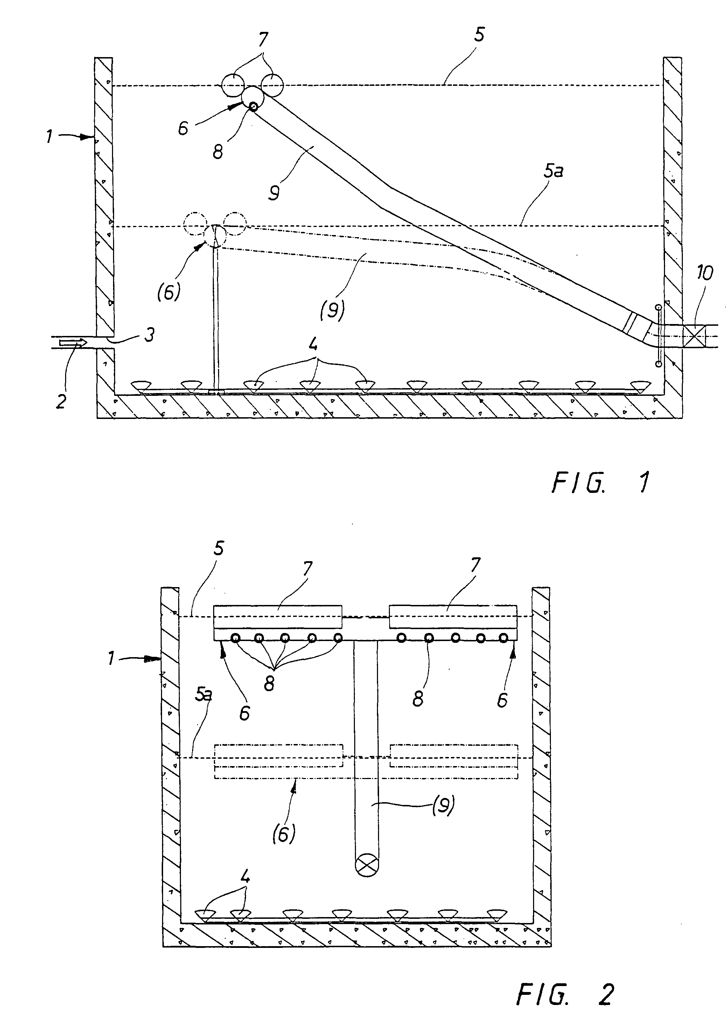

Figs. 1 and 2 show a liquid basin 1 for cyclically clarifying a liquid, which is inpumped in a way not shown, see arrow 2, through an intake pipe 3. The cyclic clarifying includes, in a way known per se, a biological and/or a chemical clarifying, where air is delivered through nozzles 4, and where chemicals are in-mixed in a conventional way, not shown. Solids from which sludge has been settled may then form scum or floccule at the liquid surface 5, and may build up sediments at the bottom of the basin 1.

Arranged in the basin 1 is a decanter device 6, in the following called "decanter", which is buoyantly supported by conventional float bodies 7 at a predetermined level below the liquid surface level 5, i.e. spaced apart from the floccule that may have settled at the liquid surface 5.

The object of the decanter 6 is to withdraw - via intake means in the form of a manifold 8 - clarified liquid from the basin 1 at a certain level below the liquid surface level 5, and to convey it, by sufficient height of fall, through a movable tubular outlet conduit 9 via a discharge valve 10 away from the basin 1.

Since the conduit 9 is movably suspended, the decanter 6 will be conveyed downwardly as a result of a lowering of the liquid surface level 5. Figs. 1 and 2 illustrate in dotted lines how the decanter 6 has descended as a result of a lowering of the liquid surface level from position 5 to position 5a.

There is a risk of intake into the decanter 6 of polluted effluent during agitation and oxygen-aeration of the liquid, and also during distribution of chemicals into the liquid. Therefore, the intake means 8 of the decanter must have a blocking function.

This blocking function must secure that the intake means 8
a) are watertight during agitation, oxygen-aeration, in-pumping, and so on;
b) open when the discharge cycle begins, i.e. when the decanter 6 is to be discharged, which is performed by opening of the discharge valve 10; and
c) can be dimensioned such that the withdrawal of liquid from the basin 1 is performed carefully.

The decanter includes, in the embodiment shown, see Figs. 1 and 2, a receiver 6, e g. of hard plastic, in the shape of a lying cylinder, where the intake means 8 are positioned slightly displaced from the longitudinal bottom edge of the cylinder 6, such that they will face obliquely downwards towards one side. When the liquid surface level lowers, this will cause the decanter 6 to slightly rotate, causing the intake means 8 to instead face obliquely downwards towards the other side.

The mutually identically shaped intake means 8 each comprises substantially three elements, i.e. a valve housing 8a, a valve member 8b freely movable within the valve housing, and having the shape of a spherical ball, e.g. of armed rubber, and an inlet opening 8c formed in the wall of the receiver 6. The object of inlet opening 8c is to guide flow of liquid from the basin 1 into the valve housing 8a. The ball 8b is movable up and down between a first position, closed position, wherein it sealingly abuts against the inlet opening 8c, and a second position, open position, wherein the ball 8b - as a result of an underpresure in the receiver 6 - has moved away from the inlet opening 8c.

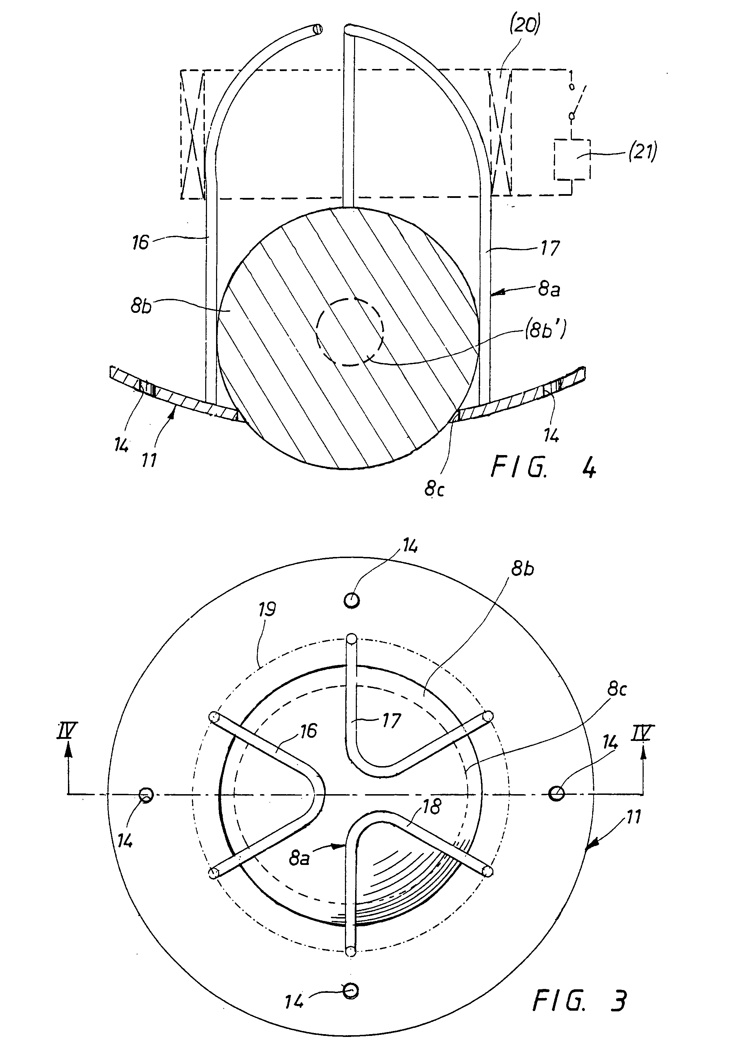

The inlet opening 8c is formed in a piece 11 of the wall of the receiver 6, see especially Fig. 7. The valve housing 8a is fixedly mounted on the piece 11, as will be described with reference to Figs. 3 and 4.

The piece 11 of the wall of the receiver 6 has a radius of curvature that has been dimensioned so small, preferably less than 0.2 cm⁻¹, that it can be regarded as generally plane, i.e. plane or insignificantly curved, at least close to the inlet opening 8c. The radius of curvature of wall piece 11 may have the same radius of curvature as the rest of the wall of receiver 6. Thus, the wall piece 11 and also the parts of the wall of the receiver 6 lying close to wall piece 11, will define a generally plane flow guide for the flow of liquid 12, see Fig. 7, that enters through the inlet opening 8c. Thus, the flow of liquid 12 will have flow composants 13, see Fig. 7, in substantially radial directions, relative to the inlet opening 8c.

According to an alternative embodiment, not shown, the receiver 6 has the shape of pipe having a square-shaped cross-section, such that corresponding flow composants 13 will be entirely radial relative to the inlet opening 8c.

The wall piece 11 is, in the embodiment shown, formed as a separate, circular, cylindrically curved wall piece, which may, for instance by means of screw joints, not shown, be secured, via screw holes 14 (see Figs. 3, 4), against the outer side of the wall of the receiver 6 right in front of an aperture 15 therein, as is shown in Fig. 7.

The valve housing 8a, which is fixedly mounted on the piece 11, has, in the embodiment shown in Figs. 3 and 4, the shape of a preferably tubular cage, having a diameter which is only slightly greater than the diameter of the inlet opening 8c, but which is about half the diameter of the piece 11.

The cage 8a is constructed of three into substantially U-form bent wires 16, 17 and 18, respectively, for instance of metal or armed plastic. The cage has a substantially cylindric shape with a diameter 19, see Figs. 3,4, that is slightly greater than the diameter of the ball 8b, so that this is able to easily move along the inside of the cage 8a.

The cage 8a is coaxially oriented above the inlet opening 8c, and its open bottom end forms a first opening oriented right across the inlet opening 8c to form a flow connection therewith. This flow connection will guide the flow of liquid 12 from the basin 1 into the cage 8a. The wires 16 - 18 have been bent inwards at the top end of the cage 8a in order to form a stop abutment for the ball 8b.

The free ends of the wires 16 - 18 are inserted and welded into a respective hole that is formed in the wall piece 11 so that this will rigidly support the valve housing 8a.

The wires 16 - 18 of the cage are so thin and are spaced apart so much that the "wall" of the cage can be regarded as almost entirely open, so that the flow of liquid 12, which is drawn from the basin 1, can pass almost without hindrance from the cage 8a into the receiver 6. The wires 16 - 18 are oriented substantially in right angles to the inlet opening 8c, such that the spaces between the wires will form second openings in the cage 8a in order to guide the flow of liquid 12 in radial directions, relative to the inlet opening 8c, from the cage 8a into the receiver 6. After passing said second openings, the flow of liquid will, as has been described in more detail above in connection with the description of the piece 11 of the wall of the receiver 6, obtain radial flow composants 13 along said piece 11, see Fig. 7.

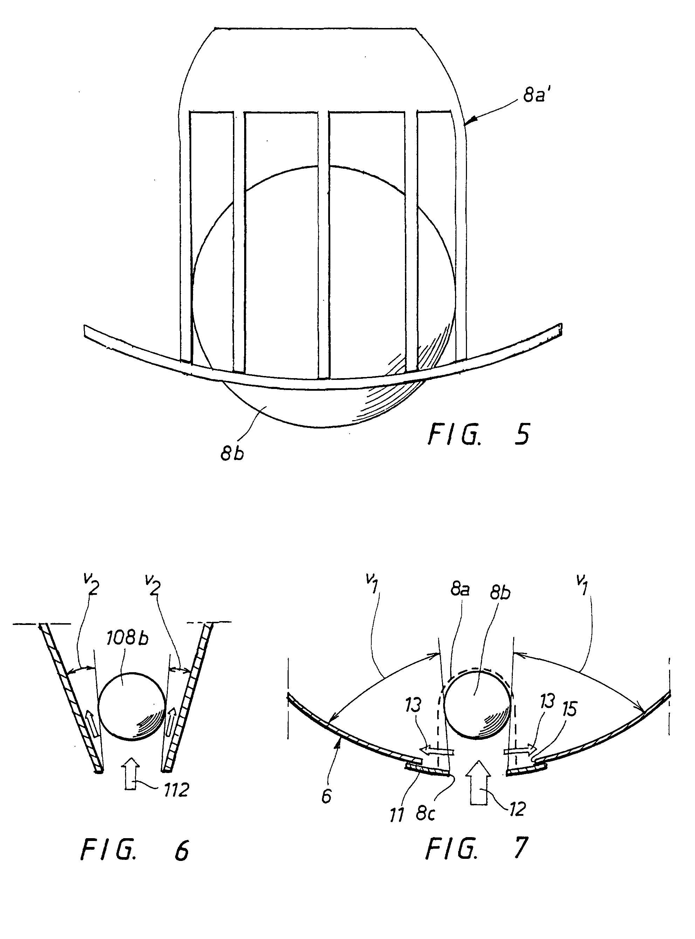

A modified shape of the valve housing 8a is shown in Fig. 5. Here, the housing 8a' is formed of a cylindric tube, wherein broad slots for the liquid flow have been formed in the lowermost part of the housing, whereas its uppermost part is tapered in order to form a stop abutment for the ball 8b.

The valve member has the following function.

In its idle position, the ball 8b abuts, by means of the gravitional force, against the inlet opening 8c due to its relative weight relative to the liquid. If the discharge valve 10 is opened, an underpressure will be created in the receiver 6 under influence of the height of liquid within the inclined conduit 9, causing the ball 8b to lift to the position shown in Fig. 7, so that the liquid 12 will be drawn into the receiver 6 due to said underpressure. As soon as the underpressure disappears, the ball 8b will return to its normal position, where it sealingly abuts against the opening 8c.

It is also apparent from Fig. 7 that the liquid entering into the receiver 6 obtains a very wide flow passage between the ball 8b and the wall of the receiver 6, this wide passage shown by the angle v₁. This should be compared to the very narrow flow passage, shown by the angle v₂ in Fig. 6, that is present in the above-mentioned known decanter.

According to a special embodiment of the receiver 6, this is rotatable about 180 degrees relative to the outlet conduit 9. This will, accordingly, enable a different discharge function.

The illustrated ball 8b can, in an alternative embodiment, be lighter than the liquid, such that the inlet opening 8c in this case has to be located at the top of the receiver 6.

According to a further embodiment, schematically shown in dotted lines in Fig. 4, the ball 8b is provided with an iron core 8b', the housing 8a being surrounded by a magnetic field generating device in the form of a magnetic coil 20, which is connected to an electric DC- or AC-current source 21. Upon energizing of the coil 20, the ball 8b will be attracted by the magnetic field of the coil, causing the ball to lift until it abuts the ceiling of the cage. Upon breaking of the current through the coil 20, the magnetic field will disappear, causing the ball 8b, by its own weight, to fall back to the sealing abutment against the opening 8c. If, according to another embodiment, not shown, the inlet opening 8c instead would be facing upwardly, i.e. if the receiver 6 would be rotated 180 degrees relative to the position shown in Fig. 4, the ball 8b will, by its own weight, fall downwards, i.e. away from the opening 8c, but it can then be held in place against this opening by means of the magnetic field from the coil 20. Then the inlet opening 8c will, thus, be opened by breaking the current through the coil 20.

## Claims

1. A decanter device, including float bodies (7) for buoyantly supporting the decanter device in a liquid basin (1), the decanter device comprising a receiver (6) having at least one inlet opening (8c) for receiving flow of liquid from the basin, and at least one outlet conduit (9) for discharging liquid from the receiver, the receiver having at least one valve member (8b) with a first position for blocking the inlet opening (8c), and with a second position for opening the inlet opening, wherein
a) the inlet opening (8c) is formed in a generally plane - i.e. in a plane or insignificantly curved-portion (11) of the wall of the receiver (6), whereby said portion (11) of the wall of the receiver will define a flow guide for said flow of liquid (12), which extends substantially in radial directions, relative to the inlet opening,
b) the valve member (8b) is surrounded by a valve housing (8a), within which the valve member can move freely,
c) said second position of the valve member (8b) is defined by a stop abutment (16 - 18) in the valve housing (8a), and
d) said valve housing (8a) has a first opening in flow connection with the inlet opening (8c) in order to guide said flow of liquid (12) from the basin (1) into said valve housing (8a), and at least one second opening to guide said flow of liquid in substantially radial directions, relative to the inlet opening (8c), from said valve housing into the receiver (6).

2. A decanter device according to Claim 1, **characterized in that** said valve housing is formed of a preferably tubular cage (8a) constructed of a number of spaced apart wires (16 - 18), the space between these wires constituting said second openings.

3. A decanter device according to Claim 1, **characterized in that** said valve housing is formed of a tubular body (8a'), the wall of which having through holes which constitute said second openings.

4. A decanter device according to any preceding Claim, **characterized in that** said generally plane portion (11) of the wall of the receiver (6) is formed of a preferably circular wall piece which is removable from the receiver.

5. A decanter device according to any preceding Claim, **characterized in that** said valve housing (8a) is fixedly connected to said generally plane portion (11) of the wall of the receiver (6).

6. A decanter device according to any preceding Claim, **characterized in that** the valve member is in the shape of a spherical ball (8b).

7. A decanter device according to any preceding Claim, **characterized in that** the valve member (8b) has an iron core (8b') and that said valve housing (8a) has a magnet field generating device (20) for controlling the movement of the valve member.

## Patentansprüche

1. Dekantiervorrichtung mit Schwimmkörpern (7) zum schwimmenden Tragen der Dekantiervorrichtung in einem Flüssigkeitsbehälter (1), wobei die Dekantiervorrichtung ein Sammelgefäß (6) mit mindestens einer Einlaßöffnung (8c) zum Aufnehmen einer Strömung von Flüssigkeit aus dem Behälter und mindestens eine Auslaßleitung (9) zum Austragen von Flüssigkeit aus dem Behälter umfaßt, wobei das Sammelgefäß mindestens ein Ventilelement (8b) mit einer ersten Lage zum Sperren der Einlaßöffnung (8c) und mit einer zweiten Lage zum Öffnen der Einlaßöffnung aufweist, wobei
a) die Einlaßöffnung (8c) in einer im allgemeinen ebenen - d.h. in einem ebenen oder unwesentlich gekrümmten - Abschnitt (11) der Wand des Sammelgefäßes (6) gebildet ist, wobei der Abschnitt (11) der Wand des Sammelgefäßes eine Strömungsführung für die Strömung von Flüssigkeit (12) festlegen wird, die sich im wesentlichen in radialen Richtungen relativ zur Einlaßöffnung erstreckt,
b) das Ventilelement (8b) von einem Ventilgehäuse (8a) umgeben ist, in dem sich das Ventilelement frei bewegen kann,
c) die zweite Lage des Ventilelements (8b) durch einen Anschlag (16-18) in dem Ventilgehäuse (8a) festgelegt ist, und
d) das Ventilgehäuse (8a) eine erste Öffnung in Strömungsverbindung mit der Einlaßöffnung (8c) aufweist, um die Strömung von Flüssigkeit (12) aus dem Behälter (1) in das Ventilgehäuse (8a) zu führen, und mindestens eine zweite Öffnung aufweist, um die Strömung von Flüssigkeit in im wesentlichen radialen Richtungen relativ zur Einlaßöffnung (8c) aus dem Ventilgehäuse in das Sammelgefäß (6) zu führen.

2. Dekantiervorrichtung nach Anspruch 1, **dadurch gekennzeichnet, daß** das Ventilgehäuse aus einem vorzugsweise rohrförmigen Käfig (8a) gebildet ist, der aus eine Anzahl von voneinander beabstandeten Drähten (16-18) aufgebaut ist, wobei der Zwischenraum zwischen diesen Drähten die zweiten Öffnungen bildet.

3. Dekantiervorrichtung nach Anspruch 1, **dadurch gekennzeichnet, daß** das Ventilgehäuse aus einem rohrförmigen Körper (8a') gebildet ist, dessen Wand Durchgangslöcher aufweist, die die zweiten Öffnungen bilden.

4. Dekantiervorrichtung nach einen der vorhergehenden Ansprüche, **dadurch gekennzeichnet, daß** der im allgemeinen ebene Abschnitt (11) der Wand des Sammelgefäßes (6) aus einem vorzugsweise kreisförmigen Wandstück gebildet ist, das von dem Sammelgefäß abnehmbar ist.

5. Dekantiervorrichtung nach einen der vorhergehenden Ansprüche, **dadurch gekennzeichnet, daß** das Ventilgehäuse (8a) fest mit dem im allgemeinen ebenen Abschnitt (11) der Wand des Sammelgefäßes (6) verbunden ist.

6. Dekantiervorrichtung nach einen der vorhergehenden Ansprüche, **dadurch gekennzeichnet, daß** das Ventilelement die Form einer sphärischen Kugel (8b) aufweist.

7. Dekantiervorrichtung nach einen der vorhergehenden Ansprüche, **dadurch gekennzeichnet, daß** das Ventilelement (8b) einen Eisenkern (8b') aufweist, und daß das Ventilgehäuse (8a) eine ein Magnetfeld erzeugenden Vorrichtung (20) zum Steuern der Bewegung des Ventilelements aufweist.

## Revendications

1. Dispositif de décantation, comprenant des flotteurs (7) destinés à supporter par flottaison le dispositif de décanteur dans un bassin de liquide (1), le dispositif de décanteur comprenant un récepteur (6) comportant au moins une ouverture d'entrée (8c) destinée à recevoir un écoulement de liquide depuis le bassin, et au moins une conduite de sortie (9) destinée à évacuer le liquide depuis le récepteur, le récepteur comportant au moins un élément de clapet (8b) présentant une première position destinée à obturer l'ouverture d'entrée (8c), et présentant une seconde position destinée à ouvrir l'ouverture d'entrée, dans lequel
a) l'ouverture d'entrée (8c) est formée dans une partie (11) sensiblement plane, c'est-à-dire dans un plan ou incurvée de façon insignifiante de la paroi du récepteur (6), d'où il résulte que ladite partie (11) de la paroi du récepteur définira un guidage d'écoulement pour ledit écoulement de liquide (12), qui s'étend pratiquement dans des directions radiales, par rapport à l'ouverture d'entrée,
b) l'élément de clapet (8b) est entouré par un logement de clapet (8a), à l'intérieur duquel l'élément de clapet peut se déplacer librement,
c) ladite seconde position de l'élément de clapet (8b) est définie par une butée d'arrêt (16 à 18) dans le logement de clapet (8a), et
d) ledit logement de clapet (8a) comporte une première ouverture en raccordement d'écoulement avec l'ouverture d'entrée (8c) de manière à guider ledit écoulement de liquide (12) depuis le bassin (1) jusque dans ledit logement de clapet (8a), et au moins une seconde ouverture pour guider ledit écoulement de liquide dans des directions sensiblement radiales, par rapport à l'ouverture d'entrée (8c), depuis ledit logement de clapet jusque dans le récepteur (6).

2. Dispositif de décantation selon la revendication 1, **caractérisé en ce que** ledit logement de clapet est formé d'une cage (8a) de préférence tubulaire constituée d'un certain nombre de fils (16 à 18) espacés, l'espace entre ces fils constituant lesdites secondes ouvertures.

3. Dispositif de décantation selon la revendication 1, **caractérisé en ce que** ledit logement de clapet est formé d'un corps tubulaire (8a'), dont la paroi comporte des trous traversants qui constituent lesdites secondes ouvertures.

4. Dispositif de décantation selon l'une quelconque des revendications précédentes, **caractérisé en ce que** ladite partie sensiblement plane (11) de la paroi du récepteur (6) est formée d'une partie de paroi de préférence circulaire qui est amovible depuis le récepteur.

5. Dispositif de décantation selon l'une quelconque des revendications précédentes, **caractérisé en ce que** ledit logement de clapet (8a) est raccordé de façon fixe à ladite partie sensiblement plane (11) de la paroi du récepteur (6).

6. Dispositif de décantation selon l'une quelconque des revendications précédentes, **caractérisé en ce que** ledit élément de clapet est sous forme d'une boule sphérique (8b).

7. Dispositif de décantation selon l'une quelconque des revendications précédentes, **caractérisé en ce que** l'élément de clapet (8b) comporte un coeur de fer (8b') et en ce que ledit logement de clapet (8a) comporte un dispositif de génération de champs magnétiques (20) destiné à commander le déplacement de l'élément de clapet.
